# EUROPÄISCHE PATENTANMELDUNG

(11) **EP 4 296 341 A1**
(43) Veröffentlichungstag der Anmeldung: **27.12.2023**
(21) Anmeldenummer: 23000087.9
(22) Anmeldetag: 13.06.2023
(51) Int. Cl.: C11D 3/00, C11D 3/37, C08G 63/672, C08G 63/688

(54) **POLYESTER, WASCH- UND REINIGUNGSMITTEL ENTHALTEND DIESE UND DEREN VERWENDUNG**

(30) Priorität: 21.06.2022 DE 102022002248
(71) Anmelder: WeylChem Performance Products GmbH, 65203 Wiesbaden (DE)
(72) Erfinder: Morschhäuser, Roman, 55122 Mainz (DE); Preuschen, Judith, 55270 Sörgenloch (DE); Ludwig, Rolf, 65817 Eppstein (DE); Riegelbeck, Stefan, 65934 Frankfurt am Main (DE); Diekhans, Niklas, 65474 Bischofsheim (DE); Kchirid, Said, 63869 Heidenbrücken (DE)
(74) Vertreter: Ackermann, Joachim

(57) **Zusammenfassung**

Beschrieben werden Polyester enthaltend, bezogen auf alle Struktureinheiten und Endgruppen im Molekül,
4 bis 30 Gew.-% an Struktureinheiten der Formel (I) oder der Formel (II) oder der Formeln (I) und (II),
0,25 bis 10 Gew.-% an Struktureinheiten der Formel (III) oder der Formel (IV) oder der Formeln (III) und (IV), und
0 bis 5 Gew.-% an Struktureinheiten der Formel (V)

-CO-R¹-CO-O-C₂H₄-O- (I),

-CO-R¹-CO-O-(C₃H₆-O)- (II),

-CO-R²-CO-O-C₂H₄-O- (III),

-CO-R²-CO-O-(C₃H₆-O)- (IV),

-CO-R³-CO-O-R⁴-O- (V),

50 bis 95 Gew.-% an nichtionischen Endgruppen der Formel (VI), und
0 bis 5 Gew.-% an nichtionischen Endgruppen der Formel (VII)

-CO-(O-C₂H₄-)ₙ-OR⁵ (VI),

-CO-OR⁶ (VII),

worin
R¹ ein zweiwertiger aromatischer Kohlenwasserstoffrest ohne Sulfogruppen oder ohne Salzen von Sulfogruppen ist,
R² ein zweiwertiger mit mindestens einer Sulfogruppe oder mit dem Salz einer Sulfogruppe substituierter aromatischer Kohlenwasserstoffrest ist,
R³ ein Alkylen-, Cycloalkylen- oder Arylenrest ist,
R⁴ ein Alkylen- oder Cycloalkylenrest ist, mit der Maßgabe, dass die Stuktureinheit der Formel (V) sich von den Stuktureinheiten der Formeln (I), (II), (III) und (IV) unterscheidet,
R⁵ C₁-C₆-Alkyl, Cycloalkyl, Aryl oder Aralkyl ist,
R⁶ ein einwertiger organischer Rest ist, und
n eine Zahl zwischen 30 und 500 bedeutet.

Die erfindungsgemäßen Polyester zeichnen sich durch eine sehr gute Schmutzablösewirkung aus, sind gut in Wasch- und Reinigungmittel-Formulierungen lagerbar und lassen sich als soil-release Polymere einsetzen.

## Beschreibung

Die Erfindung betrifft ausgewählte Polyester zum Einsatz in Wasch- und Reinigungsmitteln, die sich durch ein sehr gutes Schmutzablösevermögen auszeichnen, die Herstellung lagerstabiler flüssiger und fester Formulierungen gestatten, gut wasserlöslich, wenig hygroskopisch und von fester nicht klebriger Konsistenz sind.

Der Einsatz von Polyestern in Waschmitteln zur Verbesserung der Schmutzablösung von Textilien, zur Reduzierung der Wiederanschmutzung, zum Schutz der Fasern bei mechanischer Belastung und zum Ausrüsten der Gewebe mit einem Anti-Knittereffekt ist bekannt. Diese Polyester sind als SRP-Typen bekannt. Eine Vielzahl von Polyestertypen und deren Verwendung in Wasch- und Reinigungsmitteln sind in der Patentliteratur beschrieben. Dabei kommen neben Polyestern aufgebaut aus ausschließlich nichtionischen Baugruppen auch Polyester zum Einsatz, die zum Teil anionische Baugruppen aufweisen. Diese anionischen Polyester sind aus Gründen der Effizienz eigentlich bevorzugt; allerdings neigen solche Polyester, insbesondere in flüssigen Formulierungen, wie in Flüssigwaschmitteln, bei der Lagerung zur Ausbildung von Ablagerungen..

Die US 4,702,857 A offenbart Block-Copolyester mit anionischen Gruppen als Schmutzablösepolymere.

Aus der US 4,427,557 sind weitere SRP mit anionischen Gruppen bekannt. Diese sind mit nichtionischen Endgruppen niedrigen Molekulargewichts verschlossen.

SRP mit nichtionischen und ionischen Gruppen im Polymergerüst sowie mit nichtionischen Endgruppen sind aus mehreren Patentdokumenten bekannt.

So beschreibt WO 2008/110318 A2 anionische SRP, die einen Erweichungspunkt oberhalb von 40°C aufweisen, von Terephthalsäure, Sulfoisophthalsäure und Glykolen, wie Ethylenglykol und/oder Propylenglykol, abgeleitet sind und die von Alkylenglykolethern abgeleitete Endgruppen besitzen. Diese Polyester sind gut wasserlöslich, zeigen eine gute Schmutzablösewirkung und können gut in feste Wasch- und Reinigungsmittel eingearbeitet werden. Als Kettenlänge der eingesetzten Alkylenglykolether wird ein breiter Bereich von 1 bis 200 Wiederholeinheiten angegeben. Die Bevorzugung liegt aber im unteren Bereich entsprechend 1 bis 20 Wiederholeinheiten; dieses entspricht für Polyalkylenglykolethern einem mittleren Molekulargewicht von bis zu etwa 1000. Nach den Ausführungsbeispielen werden Polyalkylenglykolether mit drei bis acht Wiederhol-einheiten eingesetzt und der Gewichtsanteil der Endgruppen, bezogen auf das Gesamtgewicht des Polyesters, liegt unter 30 %.

Aus WO 1995/02030 A1 sind Waschmittelzusammensetzungen bekannt, welche ausgewählte SRP enthalten. Diese SRP enthalten Terephthalsäureglykoleinheiten und Sulfoisophthalsäureglykoleinheiten, mit Ethylenglykol und oder Propylenglykol als Alkylenglykolen und ausgewählte Endgruppen. Zu den Endgruppen zählen alkoxylierte Hydroxyethansulfonate, Sulfoaroyleinheiten, Poly(oxyethylen)oxy-monoalkylether oder ethoxyliere oder propoxylierte Sulfophenyleinheiten. Beispielhaft wird als SRP unter anderem ein Oligomeres aus Terephthalsäureethylenglykol-, Terephthalsäureproplyenglykol-, 5-Sulfoisophthalsäureethylenglykol- und 5-Sulfoisophthalsäureproplyenglykoleinheiten genannt, dass Endgruppen enthält, welche sich von einem oligomeren Poly(ethylenglykol)monomethylether vom Molekulargewicht 750 und zu etwa 80 mol %, bezogen auf die Menge aller Endgruppen, von Natrium 2-(2-Hydroxyethoxy)ethansulfonat ableiten. Auch diese Polyester sind gut wasserlöslich, zeigen eine gute Schmutzablösewirkung und können gut in feste Wasch- und Reinigungsmittel eingearbeitet werden.

Aus der WO 2011/120653 A1 sind farbige Polyester bekannt. Diese werden durch Copolymerisation von sulfogruppenfreien aromatischen Dicarbonsäuren oder deren polyesterbildenden Derivaten, gegebenenfalls sulfogruppenhaltigen aromatischen Dicarbonsäuren oder deren polyesterbildenden Derivaten, Diolen, Alkylenglykolethern und/oder Alkylenglykolsulfonaten in Gegenwart von Pigmenten erhalten. Die Polyester zeichnen sich durch eine sehr gute Schmutzablösewirkung aus und zeigen ein homogen gefärbtes und gleichzeitig transparentes Erscheinungsbild.

In der WO 2011/063945 A1 werden Polyester-Konzentrate mit hoher Lösestabilität und vergrauungsinhibierender Wirkung offenbart. Die wässrigen Polyester-konzentrate enthalten 12-60 Gew. % an Polyester, welche durch Copolymerisation von sulfogruppenfreien aromatischen Dicarbonsäuren oder deren polyesterbildenden Derivaten, gegebenenfalls sulfogruppenhaltigen aromatischen Dicarbonsäuren oder deren polyesterbildenden Derivaten, Ethylenglykol, 1,2-Propylenglykol, Alkylenglykolethern und gegebenenfalls Alkylenglykolsulfonaten erhalten werden, wobei mindestens eine Sulfogruppen enthaltende Komponente vorhanden sein muss und wobei das molare Verhältnis von 1,2-Propylenglykol zu Ethylenglykol größer als 1,60 ist. Diese Polyester zeichnen sich durch eine sehr gute Schmutzablösewirkung aus, zeigen beim Einsatz in Flüssigwaschmitteln eine gute vergrauungsinhibierende Wirkung und neigen in wässriger Lösung nur minimal zur Kristallisation.

Aus der WO 2011/063944 A1 sind SRP mit hoher Lösungsstabilität und vergrauungsinhibierender Wirkung bekannt. Die Polyester werden durch Copolymerisation von von sulfogruppenfreien aromatischen Dicarbonsäuren oder deren polyesterbildenden Derivaten, gegebenenfalls sulfogruppenhaltigen aromatischen Dicarbonsäuren oder deren polyesterbildenden Derivaten, Ethylenglykol, 1,2-Propylenglykol, Alkylenglykolethern und gegebenenfalls Alkylenglykolsulfonaten erhalten werden, wobei mindestens eine Sulfogruppen enthaltende Komponente vorhanden sein muss und wobei das molare Verhältnis von 1,2-Propylenglykol zu Ethylenglykol größer als 1,70 ist. Diese Polyester zeichnen sich durch eine sehr gute Schmutzablösewirkung aus, zeigen eine gute vergrauungsinhibierende Wirkung für Textilien, sind als Granulate gut rieselfähig und behalten in gelöster Form auch bei längerer Lagerung weitgehend eine dünnflüssige Konsistenz.

Die in diesen Dokumenten beschriebenen Polyester enthalten von Alkylenglykolethern abgeleiteten Endgruppen, welche über einen weiten Bereich von Molekulargewichten definiert sind. Dabei wird jedoch der Einsatz von kürzerkettigen Alkylenglykolethern bevorzugt.

Die Aufgabe der vorliegenden Erfindung bestand in der Bereitstellung anionischer Polyester, die gut wasserlöslich und/oder dispergierbar sind, gute schmutzablösende Wirkung und hohes Dispergiervermögen zeigen, die kompatibel mit in Wasch- und Reinigungsmitteln gängigen Zusatz- und Hilfsstoffen und die über längere Zeiträume in Wasch- und Reinigungsmittel-Formulierungen lagerfähig sind und die keine Tendenz zum Ausbilden von Niederschlägen oder Phasenseparierungen in flüssigen Wasch- und Reinigungsmittelformulierungen, welche anionische Tenside enthalten, zeigen.

Die erfindungsgemäß eingesetzten Polyester zeigen ein sehr gutes Schmutzablösevermögen, insbesondere gegenüber öligen und fettigen Flecken, zeichnen sich durch ein sehr gutes Auflöseverhalten bereits bei Temperaturen von 20°C aus und können gut als rieselfähige, lagerstabile Granulate dargeboten und in feste und flüssige Zubereitungen eingearbeitet werden. Aufgrund ihrer anionischen Natur zeigen sie ein sehr gutes Dispergiervermögen und vermindern damit die Schmutzablagerung während des Waschvorganges.

Als überraschend muss angesehen werden, dass die erfindungsgemäß eingesetzten Polyester in pulverförmige Wasch- und Reinigungsmittel sowie insbesondere in Flüssigwaschmittel und in flüssige Reinigungsmittel eingearbeit eine ausgezeichnete Lagerstabilität zeigen und auch über lange Zeiträume und auch bei Temperaturen < 25°C nicht zum Ausfallen oder Sedimentieren neigen.

Wenngleich Polyester mit ionischen Gruppen im Polymergerüst sowie mit nichtionischen und anionischen Endgruppen grundsätzlich bekannt sind, so neigen diese insbesondere in flüssigen Formulierungen mit hohen anionischen Tensidanteilen häufig immer noch zum Ausfällen bzw. zur wirksamkeitsmindernder Kristallisation.

In der Vergangenheit versuchte man, einen gewissen anionischen Anteil als Endgruppen am Polymergerüst einzusetzen, um die Vorzüge anionischer Polyester in der Waschleistung hervorzurufen. Aufgrund der im vorangegangenen beschriebenen Ausfällungserscheinungen gelang es üblicherweise nicht, solche Polymere in Flüssigwaschmittel ausreichend stabil einzuarbeiten. Dies gelang nur, wenn der anionischen Anteil möglichst klein gehalten wurde, was allerdings zu unbefriedigenden Waschergebnissen führte. Gleiches gilt für die Verwendung von Sulfonatmonomeren in der Hauptkette. Auch hier sind Polyester mit Molekulargewichten bis etwa 2.700 g/mol in Flüssigwaschmitteln mit anionischen Tensidsystemen löslich. Aber auch hier ließ die Waschleistung letztendlich zu wünschen übrig.

Zudem wurde mit speziellen Kombinationen von Diolen in bestimmten Mengenverhältnissen oder mit nichtionischen Polyalkoxyether-Endgruppen mit einem geringen Kondensationsgrad von typischerweise bis zu 5 Wiederholeinheiten gearbeitet.

Mit keinem der beschriebenen Konzepte konnten bisher Polyester mit ausreichend hoher Lagerstabilität (Ausfällungen) und Waschleistung in Flüssigformulierungen erzielt werden.

Es wurde jetzt überraschend gefunden, dass die Kombination eines vergleichsweise geringen Anteils an wiederkehrenden Struktureinheiten mit Sulfonatgruppen neben einem hohen Anteil an wiederkehrenden Struktureinheiten ohne Sulfonatgruppen im Polymergerüst mit einem ausreichend hohen Anteil an nichtionischen Polyalkoxyether-Endgruppen mit einem hohen Anteil an Alkoxy-Wiederholeinheiten zu Polyestern führt, die sich als sehr lagerstabil in Wasch- oder Reinigungsmittel-Formulierungen erwiesen haben und die einen ausgezeichneten Schmutzablöseeffekt bewirken.

Gegenstand der Erfindung sind Polyester enthaltend, bezogen auf alle Struktureinheiten und Endgruppen im Molekül,
4 bis 30 Gew.-% an Struktureinheiten der Formel (I) oder der Formel (II) oder der Formeln (I) und (II),
0,25 bis 10 Gew.-% an Struktureinheiten der Formel (III) oder der Formel (IV) oder der Formeln (III) und (IV), und
0 bis 5 Gew.-% an Struktureinheiten der Formel (V)

   -CO-R¹-CO-O-C₂H₄-O- (I),

   -CO-R¹-CO-O-(C₃H₆-O)- (II),

   -CO-R²-CO-O-C₂H₄-O- (III),

   -CO-R²-CO-O-(C₃H₆-O)- (IV),

   -CO-R³-CO-O-R⁴-O- (V),
50 bis 95 Gew.-% an nichtionischen Endgruppen der Formel (VI), und
0 bis 5 Gew.-% an nichtionischen Endgruppen der Formel (VII), und

   -CO-(O-C₂H₄-)ₙ-OR⁵ (VI),

   -CO-OR⁶ (VII),

   worin
   R¹ ein zweiwertiger aromatischer Kohlenwasserstoffrest ohne Sulfogruppen oder ohne Salzen von Sulfogruppen ist,
   R² ein zweiwertiger mit mindestens einer Sulfogruppe oder mit dem Salz einer Sulfogruppe substituierter aromatischer Kohlenwasserstoffrest ist,
   R³ ein Alkylen-, Cycloalkylen- oder Arylenrest ist,
   R⁴ ein Alkylen- oder Cycloalkylenrest ist, mit der Maßgabe, dass die Stuktureinheit der Formel (V) sich von den Stuktureinheiten der Formeln (I), (II), (III) und (IV) unterscheidet,
   R⁵ C₁-C₆-Alkyl, Cycloalkyl, Aryl oder Aralkyl ist,
   R⁶ ein einwertiger organischer Rest ist, und
   n eine Zahl zwischen 30 und 500 bedeutet.

R¹ ist ein zweiwertiger aromatischer Kohlenwasserstoffrest. Dieser leitet sich von einer aromatischen Dicarbonsäure oder deren Derviaten, wie Dicarbonsäureestern, ab. Dabei handelt es sich um einen aromatischen Kohlenwasserstoffrest mit zwei kovalenten Bindungen, welche die Verbindung zum Rest des Moleküls herstellen. Der aromatische Kohlenwasserstoffrest kann unsubstituiert sein oder weist ein oder mehrere nichtionische Substituenten auf, wie Alkyl oder Alkoxy. Inbesondere enthält R¹ keine Sulfogruppen oder keine Salze von Sulfogruppen. Beispiele für zweiwertige aromatische Kohlenwasserstoffreste sind Phenylen, insbesondere 1,3- und 1,4-Phenylen.

R² ist ein zweiwertiger mit mindestens einer Sulfogruppe oder dem Salz einer Sulfogruppe substituierter aromatischer Kohlenwasserstoffrest. Dieser leitet sich ebenfalls von einer aromatischen Dicarbonsäure oder deren Derviaten, wie Dicarbonsäureestern, ab.Dabei handelt es sich um einen aromatischen Kohlenwasserstoffrest mit zwei kovalenten Bindungen, welche die Verbindung zum Rest des Moleküls herstellen. Der aromatische Kohlenwasserstoffrest weist mindestens eine Sulfogruppe oder deren Salz, vorzugsweise ein oder zwei Sulfogruppen oder deren Salze als Substituenten auf und kann darüber hinaus noch ein oder mehrere weitere Substituenten tragen, wie Alkyl oder Alkoxy. Beispiele für zweiwertige aromatische mit mindestens einer Sulfogruppe oder deren Salz substituierte aromatische Kohlenwasserstoffreste sind Sulfophenylen, insbesondere 5-Sulfo-1,3-phenylen, oder Sulfonaphthylen oder die Alkali-, Erdalkali- oder Ammoniumsalze dieser Reste.

Als Salz einer Sulfogruppe kommen vorzugsweise Salze der Formel -SO₃⁻ (Katⁱ⁺)_{1/i} in Frage, worin i 1, 2 oder 3 bedeutet, vorzugsweise 1 ist.

Kat ist ein ein- bis dreifach geladenes Kation. Beispiele dafür sind Kationen der Alkalimetalle oder der Erdalkalimetalle oder Ammoniumkationen. Bevorzugt werden Natrium-, Kalium-, Magnesium- oder Calciumkationen oder quaternäre Ammoniumkationen.

Bei R³ handelt es sich um einen Alkylen-, Cycloalkylen- oder Arylenrest. Dieser weist zwei kovalente Bindungen auf, welche die Verbindung zum Rest des Moleküls herstellen. Der Rest kann unsubstituiert sein oder weist ein oder mehrere Substituenten auf, wie Alkyl oder Alkoxy. Beispiele für Alkylenreste R³ sind solche mit 2 bis 8 Kohlenstoffatomen. Beispiele für Cycloalkylenreste sind solche mit fünf oder sechs Ringkohlenstoffatomen. Beispiele für Arylenreste sind solche mit sechs bis vierzehn Ringkohlenstoffatomen, insbesondere Phenylen oder Naphthylen.

Bei R⁴ handelt es sich um einen Alkylen- oder Cycloalkylenrest. Dieser weist zwei kovalente Bindungen auf, welche die Verbindung zum Rest des Moleküls herstellen.

Der Rest kann unsubstituiert sein oder weist ein oder mehrere Substituenten auf, wie Alkyl oder Alkoxy. Beispiele für Alkylenreste R⁴ sind solche mit 2 bis 3 Kohlenstoffatomen. Beispiele für Cycloalkylenreste sind solche mit fünf oder sechs Ringkohlenstoffatomen.

R³ leitet sich von einer Dicarbonsäure oder deren Derviaten, wie Dicarbonsäureestern, ab. R⁴ leitet sich von einem zweiwertigen Alkohol ab.

Die Kombinationen von R³ und R⁴ bilden eine Struktureinheit der Formel (V). Diese ist im Einzelfall so zu wählen, dass sie sich von den Stuktureinheiten der Formeln (I), (II), (III) und (IV) unterscheidet.

R⁵ kann Alkyl bedeuten. Dabei handelt es sich um Alkylgruppen, die geradkettig oder verzweigt sein können. Insbesondere haben Alkylgruppen ein bis sechs Kohlenstoffatome. Bevorzugt sind Methyl und Ethyl, insbesondere Methyl.

R⁵ kann Cycloalkyl bedeuten. Dabei handelt es sich in der Regel um Cycloalkylgruppen mit fünf bis sechs Ringkohlenstoffatomen. Besonders bevorzugt ist Cyclohexyl.

R⁵ kann Aryl bedeuten. Dabei handelt es sich in der Regel um aromatische Kohlenwasserstoffreste mit fünf bis zehn Ringkohlenstoffatomen. Bevorzugt ist Phenyl.

R⁵ kann Aralkyl bedeuten. Dabei handelt es sich in der Regel um Arylgruppen, die über eine Alkylengruppe mit dem Rest des Moleküls verbunden sind. Bevorzugt ist Benzyl.

R⁵ ist bevorzugt C₁-C₆-Alkyl, insbesondere Methyl oder Ethyl.

Die erfindungsgemäßen Polyester enthalten Struktureinheiten der Formeln (I) und (III) oder der Formeln (II) und (IV) oder der Formeln (I), (II), (III) und (IV).

Der Anteil der Struktureinheiten der Formel (I) oder der Formel (II) oder zusammengenommen der Formeln (I) und (II) beträgt, bezogen auf alle Struktureinheiten und Endgruppen im Polyester, 4 bis 30 Gew.-%, vorzugsweise 8 bis 22 Gew.-%, und insbesondere 10 bis 20 Gew.-%

Enthält der erfindungsgemäße Polyester Struktureinheiten der Formeln (I) und (II), so kann deren molares Verhältnis in weiten Bereichen schwanken. Beispielsweise bewegt sich das molare Verhältnis der Struktureinheiten der Formel (I) zu den Struktureinheiten der Formel (II) im Bereich von 1 : 99 bis 99 : 1, vorzugsweise von 1 : 4 bis 4 : 1 und insbesondere von 1 : 4 bis 1 : 1.

Die erfindungsgemäßen Polyester enthalten auch Struktureinheiten der Formel (III) oder der Formel (IV) oder der Formeln (III) und (IV).

Der Anteil der Struktureinheiten der Formel (III) oder der Formel (IV) oder zusammengenommen der Formeln (III) und (IV) beträgt, bezogen auf alle Struktureinheiten und Endgruppen im Polyester, 0,25 bis 10 Gew.-%, vorzugsweise 0,3 bis 5,0 Gew.-%, und insbesondere 0,5 bis 3,0 Gew.-%

Enthält der erfindungsgemäße Polyester Struktureinheiten der Formeln (III) und (IV), so kann deren molares Verhältnis in weiten Bereichen schwanken. Beispielsweise bewegt sich das molare Verhältnis der Struktureinheiten der Formel (III) zu den Struktureinheiten der Formel (IV) im Bereich von 1 : 99 bis 99 : 1, vorzugsweise von 1 : 4 bis 4 : 1 und insbesondere von 1 : 4 bis 1 : 1.

Die Propylenglykoleinheiten -C₃H₆- in den Struktureinheiten der Formeln (II) und (IV) können die Struktur -CH₂-CH₂-CH₂- oder vorzugsweise die Struktur -CH(CH₃)-CH₂-aufweisen.

Die erfindungsgemäßen Polyester können Struktureinheiten der Formel (V) enthalten. Der Anteil an Struktureinheiten der Formel (V) beträgt, bezogen auf alle an Struktureinheiten und Endgruppen im Polyester, 0 bis 5 Gew.-%, vorzugsweise 0 bis 3 Gew.-%, und insbesondere 0 bis 1 Gew.-%.

Die Struktureinheiten der Formel (V) leiten sich generell von zur Polykondensation befähigten Monomeren ab.

Beispiele für Struktureinheiten der Formel (V) sind Struktureinheiten, die sich von aliphatischen oder cycloaliphatischen Dicarbonsäuren oder deren Derivaten, wie Dialkylestern, und von zweiwertigen Alkoholen ableiten. Beispiele dafür sind Ethylenadipat oder Ethylensebacat.

Weitere Beispiele für solche Struktureinheiten sind vernetzende Struktureinheiten.

Unter vernetzenden Struktureinheiten sind im Rahmen dieser Beschreibung Struktureinheiten zu verstehen, die mindestens drei Funktionalitäten, wie Sauerstoff- oder Carbonsäurebrücken aufweisen und die mindestens zwei Polyesterketten miteinander kovalent verbinden.

Vernetzende Struktureinheiten in den erfindungsgemäß eingesetzten Polyestern können solche der Formel (X)

-R⁷-(X)_{y}- (X)

worin
y eine Zahl von 3 bis 6 ist, vorzugsweise 3,
R⁷ ein drei- bis sechswertiger organischer Rest, vorzugsweise ein drei- bis sechswertiger Alkyl- oder Arylrest ist, und
X -O- und/oder -COO- bedeutet.

Bevorzugt sind nicht vernetzte Polyester.

Die erfindungsgemäßen Polyester enthalten Endgruppen der Formel (VI) oder der Formeln (VI) und (VII).

Der Anteil der Endgruppen der Formel (VI) beträgt, bezogen auf alle Struktureinheiten und Endgruppen im Polyester, 50 bis 95 Gew.,-%,vorzugsweise 70 bis 95 Gew.-%, besonders bevorzugt 80 bis 93 Gew.-%, und ganz besonders bevorzugt 85 bis 92 Gew.-%

Die erfindungsgemäßen Polyester können nichtionische Endgruppen der Formel (VII) enthalten. Der Anteil an Endgruppen der Formel (VII) beträgt, bezogen auf alle Struktureinheiten und Endgruppen im Polyester, 0 bis 5 Gew.-%, vorzugsweise 0 bis 3 Gew.-%, und insbesondere 0 bis 1 Gew.-%.

Die erfindungsgemäßen Polyester weisen bevorzugt nur nichtionische Endgruppen auf.

Bevorzugt sind Polyester, bei denen R¹ ein unsubstituierter Phenylen- oder Naphthylenrest ist, vorzugsweise ein 1,3- oder 1,4-Phenylenrest und insbesondere ein 1,4-Phenylenrest.

Ebenfalls bevorzugt sind Polyester, bei denen R² ein mit ein oder zwei Sulfogruppen oder deren Salzen substituierter Phenylen- oder Naphthylenrest ist, insbesondere ein mit einer Sulfogruppe oder deren Salz in 5-Position substituierter 1,3-Phenylenrest.

Weiterhin bevorzugt sind Polyester, die neben den Endgruppen nur Struktureinheiten der Formeln (II) und (IV) enthalten.

Weitere bevorzugte Polyester enthalten neben den Endgruppen nur Struktureinheiten der Formeln (I), (II), (III) und (IV).

Besonders bevorzugt sind Polyester, die nur Endgruppen der Formel (VI) enthalten.

Ganz besonders bevorzugt sind Polyester, bei denen n eine Zahl zwischen 45 und 230, vorzugsweise zwischen 55 und 140 bedeutet.

Besonders bevorzugt sind Polyester, bei denen R⁵ C₁-C₆-Alkyl ist, insbesondere Methyl oder Ethyl.

Die erfindungsgemäß eingesetzten Polyester sind durch das Vorliegen eines Schmelzbereiches gekennzeichnet, der bei mindestens 45 °C beginnt. Dieser Schmelzbereich ist auf ein Temperaturintervall verteilt.

Die Schmelzbereichsbestimmung erfolgt mit Hilfe einer Kofler Bank, auf der ein Pulver mit einer Korngrößenfraktion von 200 - 900 Mikron des zu prüfenden Polyesters einem Temperaturgradienten ausgesetzt wird und dadurch eine Temperatur ermittelt wird, bei der das Polyesterpulver zu schmelzen beginnt.

Die Schmelzbereichsbestimmung kann dabei wie folgt durchgeführt werden: Der zu prüfende Polyester wird mit Hilfe einer geeigneten Siebmühle vermahlen und die Korngrößenfraktion von 200-900 Mikron mittels einer geeigneten Siebkombination vom Fein- und Grobanteil befreit. Anschließend wird auf einer bis zur Temperaturkonstanz temperierten Kofler Bank ein Heizgradient auf einer Metallauflage eingestellt. Das Polyestergranulat wird nun über die gesamte Metallauflage der Bank (Heizgradient) verteilt. Nach 10 min wird die Koflerbank gekippt und dabei noch feste Produktreste abgeschüttet. Der Beginn des Schmelzbereichs ist dadurch gekennzeichnet, dass das Produkt ab einer bestimmten Stelle an der Bank mit der beheizten Oberfläche anhaftet. An diesem Punkt wird mit einem Infrarotthermometer mit ausreichender Präzision (+/- 1°C) die Oberflächentemperatur abgenommen. Diese Temperatur wird als Beginn des Schmelzbereichs definiert.

Bevorzugt sind Polyester mit Schmelzbereichen, die bei mindestens 50°C beginnen, insbesondere mit Schmelzbereichen von 53 bis 70°C.

Der Schmelzbereich des erfindungsgemäß eingesetzten Polyesters kann durch die Auswahl von Art und Menge der zur Herstellung eingesetzten Monomeren beeinflusst werden sowie über das Molekulargewicht entsprechend der Kettenlänge des Polyesters. Dem Fachmann sind die hierzu zu ergreifenden Maßnahmen bekannt.

Ganz besonders bevorzugt werden Polyester, die nur Endgruppen der Formel (VI) enthalten und die neben den Endgruppen nur Struktureinheiten der Formeln (I), (II), (III) und (IV) enthalten.

Äußerst bevorzugt sind Polyester, die nur Struktureinheiten der Formeln (la) und (Va) und nur Endgruppen der Formel (VI) aufweisen, wobei der Anteil der Struktureinheiten der Formel (la) 4 bis 30 Gew. % beträgt und der Anteil der Struktureinheiten der Formel (Va) 0,25 bis 10 Gew. % und der Anteil der Endgruppen 50 bis 95 Gew.-% beträgt, bezogen auf alle Struktureinheiten und Endgruppen, oder die nur Struktureinheiten der Formeln (Ib) und (Vb) und nur Endgruppen der Formel (VI) aufweisen, wobei der Anteil der Struktureinheiten der Formel (Ib) 4 bis 30 Gew. % beträgt und der Anteil der Struktureinheiten der Formel (Vb) 0,25 bis 10 Gew. % und der Anteil der Endgruppen 50 bis 95 Gew.-% beträgt, bezogen auf alle Struktureinheiten und Endgruppen oder die nur Struktureinheiten der Formeln (la), (Ib), (Va) und (Vb) und nur Endgruppen der Formel (VI) aufweisen, wobei der Anteil der Struktureinheiten der Formeln (la) und (Ib) zusammengenommen 4 bis 30 Gew. % beträgt und der Anteil der Struktureinheiten der Formeln (Va) und (Vb) zusammengenommen 0,25 bis 10 Gew. % beträgt und der Anteil der Endgruppen 50 bis 95 Gew.-% beträgt, bezogen auf alle Struktureinheiten und Endgruppen, wobei die Endgruppen der Formel (VI) über eine Esterbindung mit Carboxylresten des Polyesters kovalent verbunden sind

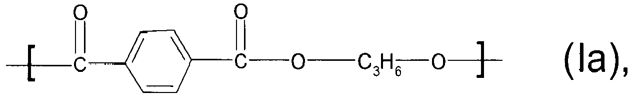

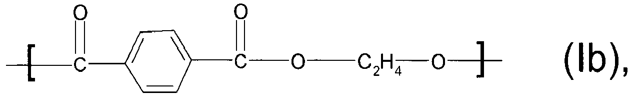

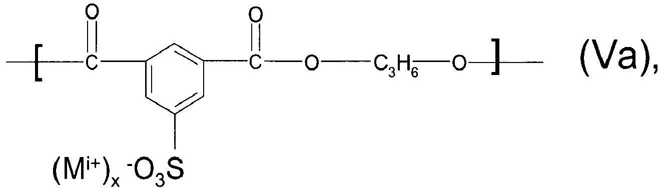

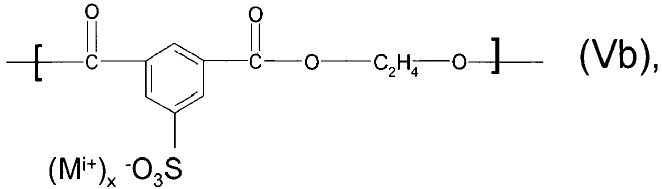

-CO-(O-C₂H₄)ₙ-OR⁵ (VI),

worin R⁵ und n die in weiter oben definierten Bedeutungen besitzen,
M Wasserstoff oder ein ein- oder zweiwertiges Kation bedeutet,
i 1 oder 2 ist,
x 0,5 oder 1 bedeutet und das Produkt i · x = 1 ist.

Die Gewichtsmittel der Molekulargewichte M_{w} der erfindungsgemäßen Polyester liegen in der Regel im Bereich von 3.500 g/mol bis 20.000 g/mol, bevorzugt 4.000 g/mol bis 16.000 g/mol, besonders bevorzugt 5.000 g/mol bis 15.000 g/mol.

Das Erzeugen der gewünschten Molekulargewichte kann durch die Auswahl der Verhältnisse der einzelnen Monomeren zueinander erfolgen. Diese Vorgehensweise ist dem Fachmann bekannt.

Das Gewichtsmittel der Molekulargewichte wird mittels Größenausschlusschromatographie bestimmt. Diese wird vorzugsweise in einem Gemisch von Wasser und Acetonitril durchgeführt, wobei eine Kalibierung mit Hilfe sulfonierter Polystyrol-Standards mit enger Molekulargewichtsverteilung vorgenommen wird. Enge Molekulargewichtsverteilung bedeutet dabei eine Polydispersität ***Ð*** (M_{w}/Mₙ) von kleiner als 1,5.

Weitere bevorzugte Polyester sind dadurch gekennzeichnet, dass diese als wässrige Lösungen dargereicht werden können mit einem Gewichtsanteil an Polyester von 5,0 bis 80,0 Gew. %, bevorzugt 10,0 bis 75,0 Gew. % und besonders bevorzugt 50,0 bis 70,0 Gew. %, jeweils bezogen auf das Gesamtgewicht der wässrigen Lösung.

Die Synthese der erfindungsgemäß eingesetzten Polyester erfolgt nach an sich bekannten Verfahren, indem die für den Aufbau des gewünschten Polyesters erforderlichen Monomeren und gegebenenfalls ein oder mehrere Pigmente unter Zusatz eines Katalysators, sowie einem Salz einer kurzkettigen Carbonsäure, bevorzugt Acetat, zunächst bei Normaldruck auf Temperaturen von 160 bis ca. 220°C unter Verwendung einer Inert-Atmosphäre vorverestert werden.

Anschließend können die gewünschten Molekulargewichte im Vakuum bei Temperaturen von 160 bis ca. 240°C durch Abdestillieren überstöchiometrischer Mengen der eingesetzten Glykole aufgebaut werden.

Für die Reaktion eignen sich die bekannten Umesterungs- und Kondensationskatalysatoren des Standes der Technik, wie beispielsweise Titantetraisopropylat, Dibutylzinnoxid, Alkali- oder Erdalkalimetallalkoholate oder Antimontrioxid/Calciumacetat.

Bezüglich weiterer Einzelheiten zur Durchführung der Polykondensation wird auf EP 442 101 A1 verwiesen.

Zur Herstellung der erfindungsgemäß eingesetzten Polyester können die Monomeren der Formeln (XI), (XII) und (Xllla) und/oder (Xlllb) miteinander polykondensiert werden zusammen mit den Endgruppen bildenden Monomeren der Formel (XIV)

RO-OC-R¹-CO-OR (XI),

RO-OC-R²-CO-OR (XII),

OH-C₂H₄-OH (Xllla),

OH-C₃H₆-OH (XIIIb),

H-(O-C₂H₄)ₙ-OR⁵ (XIV),

worin R¹, R², R⁵ und n die weiter oben bezeichneten Bedeutungen besitzen und R Wasserstoff oder Alkyl bedeutet.

Gegebenenfalls können zusätzlich zu den polyesterbildenden Monomeren der Formeln (XI), (XII), (Xllla) und/oder (Xlllb) weitere polyesterbildende Monomere der Formeln (XV) und/oder (XVI) zugesetzt werden

RO-OC-R³-CO-OR (XV), HO-R⁴-OH (XVI),

worin R³ und R⁴ die weiter oben bezeichneten Bedeutungen besitzen und R Wasserstoff oder Alkyl bedeutet.

Gegebenenfalls können zusätzlich zu den Endgruppen bildenden Monomeren der Formel (XIV) weitere Endgruppen bildende Monomere der Formel (XVII) zugesetzt werden

HO-R⁶ (XVII),

worin R⁶ die weiter oben bezeichnete Bedeutung besitzt.

Die einzelnen Monomeren werden in solchen Mengen der Reaktionsmischung zugesetzt, dass die sich ausbildenden Polyester die Mengenanteile an Struktureinheiten aufweisen, wie weiter oben angegeben wurde.

Vorzugsweise enthält die Reaktionsmischung zu Beginn der Umsetzung Diol der Formeln (Xllla) und/oder (Xlllb) im Überschuss zur Menge der Dicarbonsäure-(derivate) der Formeln (XI) und (XII).

Bevorzugt erfolgt die Herstellung der erfindungsgemäß eingesetzten Polyester durch Umsetzung von
a) Terephthalsäuredimethylester,
b) Sulfoisophthalsäuredimethylester.
c) Ethylenglykol oder Propylenglykol oder einer Mischung aus Ethylenglykol und Propylenglykol, und
d) Polyethylenglykolmonomethylether und/oder Polypropylenglykolmonomethylether mit einem gewichtsmittleren Molekulargewicht im Bereich von 1500 bis 20000 g/mol, bevorzugt von 2000 bis 10000 g/mol und insbesondere von 2500 bis 6000 g/mol.

Als Propylenglykol wird vorzugsweise 1,2-Propylenglykol verwendet.

Die Struktureinheiten der Formel (I) können durch Umsetzung der oben genannten Komponente a) Terephthalsäuredimethylester mit Komponente c) Ethylenglykol erhaten werden; die Struktureinheiten der Formel (II) können durch Umsetzung der oben genannten Komponente a) Terephthalsäuredimethylester mit Komponente c) Propylenglykol erhaten werden; die Struktureinheiten der Formel (III) können durch Umsetzung der oben genannten Komponente b) Sulfoisophthalsäuredimethylester mit Komponente c) Ethylenglykol erhalten werden; und die Struktureinheiten der Formel (IV) können durch Umsetzung der oben genannten Komponente b) Sulfoisophthalsäuredimethylester mit Komponente c) Propylenglykol erhalten werden.

Die Endgruppen der Formel (VI) können durch Umsetzung der oben genannten Komponente d) Polyethylenglykolmonomethylether mit Carboxylendgruppen des Polyesters erhalten werden; die Endgruppen der Formel (VII) können durch Umsetzung der oben genannten Komponente d) Polypropylenglykolmonomethylether mit Carboxylendgruppen des Polyesters erhalten werden.

Die Polykondensation kann in Gegenwart oder vorzugsweise in Abwesenheit von einer oder mehreren vernetzend wirkenden Verbindungen, beispielsweise von Verbindungen der Formel (XVIII) stattfinden

R⁷-(X-R)_{y} (XVIII),

worin y, R⁷ , R und X die weiter oben definierte Bedeutung besitzen.

Sind bei der Polykondensation Vernetzer zugegegen, so werden diese bevorzugt in Mengen von 0,00001 bis 0,1 Mol, insbesondere von 0,00002 bis 0,01 Mol, und ganz besonders bevorzugt von 0,00005 bis 0,0001 Mol pro Mol Säure(derivaten) der Formeln (XI) und (XII) eingesetzt.

Die Polyester können in unterschiedlichen Darreichungsformen in die erfindungsgemäßen Wasch- und Reinigungsmittel eingearbeitet werden.

Die erfindungsgemäßen Wasch- und Reinigungsmittel können in der Form von Granulaten, Tabletten, Gelen, wässrige Dispersionen oder wässrige Lösungen vorliegen.

Gegenstand der Erfindung ist außerdem die Verwendung der oben beschriebenen Polyester als Komponente in Wasch- und Reinigungsmitteln, in Textilpflegemitteln und in Mitteln zur Ausrüstung von Textilien.

Die Erfindung betrifft auch die Verwendung der oben beschriebenen Polyester als Soil-Release Polymere in Wasch- und Reinigungsmitteln.

Die erfindungsgemäß eingesetzten Polyester verleihen Textilfasern signifikant verbesserte schmutzablösende Eigenschaften und unterstützen das Schmutzablösevermögen der übrigen Bestandteile von Wasch- und Reinigungsmitteln gegenüber öligen, fettigen oder Pigmentanschmutzungen wesentlich.

Weiter von Vorteil kann die Verwendung der erfindungsgemäß einesetzten Polyester in Nachbehandlungsmitteln für die Wäsche, beispielsweise in einem Weichspülmittel sein.

Mit Hilfe der erfindungsgemäß eingesetzten Polyester in Reinigungsmitteln für Oberflächen, insbesondere für harte Oberflächen, lassen sich die behandelten Oberflächen schmutzabstoßend ausrüsten.

Wasch- und Reinigungsmittelformulierungen, in denen die oben beschriebenen Polyester eingesetzt werden, können pulver-, granulat-, tabletten- pasten-, gelförmig oder flüssig sein.

Besonders bevorzugt werden die oben beschriebenen Polyester in pasten-, gelförmigen oder insbesondere flüssigen Wasch- und Reinigungsmitteln eingesetzt. Darin bleiben die Polyester vollständig gelöst und zeichen sich durch ein außerordentlich gutes Schmutzablösevermögen aus.

Ebenfalls bevorzugt werden die oben beschriebenen Polyester in pulverförmigen Wasch- und Reinigungsmitteln eingesetzt. Darin sind die Polyester ebenfalls besonders lagerstabil und zeichen sich durch ein außerordentlich gutes Schmutzablösevermögen aus.

Beispiele für erfindungsgemäße Wasch- und Reinigungsmittel sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen und Bügelhilfen.

Insbesondere sind die erfindungsgemäßen Polyester für die Verwendung insogenannten Mono-dose Systemen und Waschmittelkonzentraten geeignet.

Die oben beschriebenen Polyester können auch in Haushaltsreinigungsmitteln, beispielsweise in Allzweckreinigern, oder in Geschirrspülmitteln, in Teppichreinigungs- und Imprägniermitteln, in Reinigungs- und Pflegemitteln für Böden und andere harte Oberflächen, z.B. aus Kunststoff, Keramik, Glas oder mit Nanotechnologie beschichtete Oberflächen eingearbeitet werden.

Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Die erfindungsgemäß ausgerüsteten Wasch- und Reinigungsmittel enthalten im Allgemeinen mindestens 0,1 Gew.-%, bevorzugt zwischen 0,1 und 5 Gew.-% und besonders bevorzugt 0,3 bis 1 % Gew.-% der Polyester, bezogen auf die fertigen Mittel.

Die Formulierungen sind je nach der vorgesehenen Anwendung in ihrer Zusammensetzung der Art der zu behandelnden oder zu waschenden Textilien oder der zu reinigenden Oberflächen anzupassen.

Die erfindungsgemäß ausgerüsteten Wasch- und Reinigungsmittel können gängige Inhaltsstoffe, wie Tenside, Emulgatoren, Gerüststoffe, Bleichkatalysatoren und Bleichaktivatoren, Sequestriermittel, Vergrauungsinhibitoren, Farbübertragungsinhibitoren, Farbfixiermittel, Enzyme, optische Aufheller oder weich machende Komponenten enthalten. Außerdem können Formulierungen oder Teile der Formulierung im Sinne der Erfindung durch Farbstoffe und/oder Duftstoffe gezielt eingefärbt und/oder parfümiert werden.

Besonders bevorzugt sind Flüssigwaschmittel enthaltend die erfindungsgemäßen Polyester und 10 bis 40 Gew. %, bezogen auf die Gesamtmenge des Flüssigwaschmittels, an anionischem Tensid oder an Gemischen von anionischen Tensiden.

Die nachfolgenden Beispiele sollen die Erfindung erläutern ohne sie darauf einzuschränken. Alle Prozentangaben sind, sofern nicht explizit anders angegeben, als Gewichtsprozent (Gew.-%) zu verstehen.

### Beispiel 1 (erfindungsgemäßer Polyester)

In einem 2-Liter Vierhalskolben mit KPG-Rührer, Innenthermometer, Gaseinleitungsrohr und Destillierbrücke wurden nacheinander 194,19g (1 mol) Terephthalsäuredimethylester, 74g (0,25 mol) 5-Sulfoisophthalsäuredimethylester-Natriumsalz, 31g (0,5 mol) Ethylenglykol und 152g (2 mol) 1,2-Propylenglykol vorgelegt. Anschließend wurden zur Reaktionsmischung 1000g (0,5 mol) Poylyethylenglykolmonomethylether 2000 hinzugegeben.

Danach wurde das Reaktionsgemisch durch Einleitung von Stickstoff inertisiert. Im Gegenstrom wurden darauffolgend 0,4 g Titantetraisopropylat und 0,5 g Natriumacetat zur Reaktionsmischung hinzugegeben. Das Gemisch wurde auf etwa 165°C erhitzt und eine Stunde auf Temperatur gehalten. Bei dieser Temperatur begann die Umesterung. Das dabei entstehende Methanol wurde mit Hilfe eines leichten Stickstoffstroms abdestilliert.

Zwei Stunden nach Beginn der Destillation wurde die Temperatur innerhalb von 1 h auf 210°C erhöht. Nach beendeter Reaktionszeit wurde auf unter 195°C abgekühlt und innerhalb von 30 Minuten der Druck auf 10 mbar reduziert. Während der sich anschließenden zweistündigen Vakuumdestillation wurde die Kondensation durch Abdestillation der überschüssigen Alkoholmenge vervollständigt. Für weitere 30 Minuten wurde das Vakkuum auf 1 mbar reduziert, anschließend mit Stickstoff belüftet und die Schmelze auf geeignete Bleche ausgetragen.

### Beispiele 2 bis 22 (erfindungsgemäße Polyester) und Vergleichsbeispiele V-1 bis V-4

Man verfuhr wie bei der Herstellung des Polyesters in Beispiel 1 angegeben und setzte die in der nachstehenden Tabelle I aufgeführten Komponenten miteinander um.

In allen Fällen wurde mit 0,4g Titantetraisopropylat als Umesterungskatalysator und 0,35g Natriumacetat als Hilfskatalysator gearbeitet.

Dabei wurden Polyester mit der Zusammensetzung gemäß Tabelle II erhalten.

**Tabelle I der Ausgangsmaterialien zur Herstellung der Polyester der Beispiele 1 bis 22 und der Vergleichsbeispiele V-1 bis V-4**

| Beispiel Nr. | 5-SIM^{*)} (mol) | DMT^{*)} (mol) | EG^{*)} (mol) | PG^{*)} (mol) | MPEG 750^{*)} (mol) | MPEG 2000^{*)} (mol) | MPEG 5000^{*)} (mol) | MPEG 250^{*)} (mol) |
|---|---|---|---|---|---|---|---|---|
| 1 | 0,25 | 1 | 0,5 | 2 | - | 0,5 | - | - |
| 2 | 1 | 4 | 1 | 8 | - | 2 | - | - |
| 3 | 1 | 4 | 0 | 8 | - | 2 | - | - |
| 4 | 1 | 4 | 4 | 8 | - | - | 2 | - |
| 5 | 1 | 4 | 4 | 8 | - | - | 1,8 | - |
| 6 | 1 | 4 | 4 | 8 | - | - | 1,6 | - |
| 7 | 1 | 4 | 4 | 8 | - | - | 1,4 | - |
| 8 | 1 | 4 | 4 | 8 | - | - | 1,2 | - |
| 9 | 1 | 4 | 4 | 8 | - | - | 1 | - |
| 10 | 1,1 | 4 | 4 | 8 | - | - | 2 | - |
| 11 | 1.2 | 4 | 4 | 8 | - | - | 2 | - |
| 12 | 1,3 | 4 | 4 | 8 | - | - | 2 | - |
| 13 | 1,4 | 4 | 4 | 8 | - | - | 2 | - |
| 14 | 1,5 | 4 | 4 | 8 | - | - | 2 | - |
| 15 | 0,8 | 4 | 4 | 8 | - | - | 1,4 | -- |
| 16 | 0,6 | 4 | 4 | 8 | - | - | 1,4 | -- |
| 17 | 0,4 | 4 | 4 | 8 | - | - | 1,4 | -- |
| 18 | 0,2 | 4 | 4 | 8 | - | - | 1,4 | -- |
| 19 | 0,6 | 4 | 2 | 8 | - | - | 1,4 | -- |
| 20 | 0,6 | 4 | 1 | 8 | - | - | 1,4 | - |
| 21 | 0,6 | 4 | - | 8 | - | - | 1,4 | - |
| 22 | 0,6 | 4 | - | 8 | - | - | 1,4 | - |
| V-1 | 1,32 | 4 | 15,2 | 7,6 | 0,18 | 0,06 | - | - |
| V-2 | 1,32 | 4 | 15,2 | 7,6 | 0,12 | 0,12 | - | - |
| V-3¹⁾ | 0,8 | 5 | 3,7 | 3,7 | - | - | - | 1 |
| V-4 | 0,5 | 4 | - | 12 | 1,9 | - | - | - |

| | | | | | | | | |
|---|---|---|---|---|---|---|---|---|
| ^{*)} 5-SIM = 5-Sulfoisophthalsäuredimethylester-Natriumsalz ^{*)} DMT = Dimethylterephthalat ^{*)} EG = Ethylenglykol ^{*)} PG = 1,2-Propylenglykol ^{*)} MPEG 250 = Polyethylenglykolmonomethylether Molekulargewicht 250 g/mol ^{*)} MPEG 750 = Polyethylenglykolmonomethylether Molekulargewicht 750 g/mol ^{*)} MPEG 2000 = Polyethylenglykolmonomethylether Molekulargewicht 2000 g/mol ^{*)} MPEG 5000 = Polyethylenglykolmonomethylether Molekulargewicht 5000 g/mol ¹⁾ Beispiel 1 aus WO 2008/110318 A2 | | | | | | | | |

**Tabelle II: Zusammensetzung der Polyester der Beispiele 1 bis 22 und der Vergleichsbeispiele V-1 bis V-4**

| Beispiel Nr. | 5-SIM^{*)} (mol) | DMT^{*)} (mol) | EG^{*)} (mol) | PG^{*)} (mol) | Mittlere Kettenlänge^{**)} (mol) | Anteil an Endgruppen (Gew.-%) |
|---|---|---|---|---|---|---|
| 1 | 1,0 | 4 | 0,8 | 3,2 | 5046,7 | 78,90 |
| 2 | 1,0 | 4 | 0,4 | 3,6 | 5051,1 | 78,83 |
| 3 | 1,0 | 4 | 0,0 | 4,0 | 5057,1 | 78,74 |
| 4 | 1,0 | 4,0 | 1,3 | 2,7 | 11039,7 | 90,42 |
| 5 | 1,1 | 4,4 | 1,5 | 3,0 | 11163,2 | 89,42 |
| 6 | 1,3 | 5,0 | 1,8 | 3,5 | 11317,6 | 88,20 |
| 7 | 1,4 | 5,7 | 2,0 | 4,1 | 11506,1 | 86,68 |
| 8 | 1,7 | 6,7 | 2,4 | 4,9 | 11780,7 | 84,73 |
| 9 | 2,0 | 8,0 | 3,0 | 6,0 | 12151,2 | 82,15 |
| 10 | 1,1 | 4,0 | 1,4 | 2,7 | 11070,1 | 90,17 |
| 11 | 1,2 | 4,0 | 1,4 | 2,8 | 11100,5 | 89,92 |
| 12 | 1,3 | 4,0 | 1,4 | 2,9 | 11130,9 | 89,68 |
| 13 | 1,4 | 4,0 | 1,5 | 2,9 | 11161,3 | 89,43 |
| 14 | 1,5 | 4,0 | 1,5 | 3,0 | 11191,7 | 89,19 |
| 15 | 1,1 | 5,7 | 2,0 | 3,9 | 11429,3 | 87,34 |
| 16 | 0,9 | 5,7 | 1,9 | 3,7 | 11342,4 | 88,01 |
| 17 | 0,6 | 5,7 | 1,8 | 3,5 | 11255,6 | 88,68 |
| 18 | 0,3 | 5,7 | 1,7 | 3,3 | 11168,7 | 89,37 |
| 19 | 0,9 | 5,7 | 1,1 | 4,5 | 11352,1 | 87,93 |
| 20 | 0,9 | 5,7 | 0,6 | 5,0 | 11358,5 | 87,88 |
| 21 | 0,9 | 5,7 | 0,0 | 5,6 | 11366,6 | 87,82 |
| 22 | 0,9 | 5,7 | 0,0 | 5,6 | 11366,6 | 87,82 |
| V-1 | 11,0 | 33,3 | 28,9 | 14,4 | 11950,2 | 17,73 |
| V-2 | 11,0 | 33,3 | 28,9 | 14,4 | 12571,2 | 21,80 |
| V-3 | 1,6 | 10,0 | 5,3 | 5,3 | 2910,1 | 16,56 |
| V-4 | 0,5 | 4,2 | 0 | 3,7 | 2403,0 | 61,67 |

| | | | | | | |
|---|---|---|---|---|---|---|
| ^{*)} Legende vergleiche Tabelle 1 ^{**)} ermittelt durch theoretische Berechnung aufgrund der Zusammensetzung | | | | | | |

### Anwendungsbeispiele

Die erfindungsgemäßen Polyester wurden auf ihren Soil Release Effekt hin mit einem Soil Release Polymeren des Standes der Technik verglichen.

Dazu wurden die Polyester in Konzentrationen von 1 % (Wirkstoff), bezogen auf die Waschmittelformulierung, in IEC-A Standardwaschmittel nach Rezeptur der WfK (Ordercode: 88010-1) eingebracht und die Testgewebe WFK 30A PES (Wäschereiforschungsanstalt Krefeld) wurden damit bei jeweils 40 °C 30 Minuten lang 3 Mal vorgewaschen. Die so vorbehandelten Gewebe wurden getrocknet und mit Motorenaltöl angeschmutzt (mit 25µl pro Testlappen). Nach einer Einwirkzeit von 1 Stunde wurden die Testlappen ohne Zusatz der erfindungsgemäßen Polyester (Referenz) und mit Zusatz (1 Gew.-%) der erfindungsgemäßen Polyester als Soil Release Polymeren oder mit Zusatz eines Soil Release Polyesters des Standes der Technik gewaschen. Anschließend wurde die Remission der Testgewebe mit Hilfe eines Elephro Testgerätes mit einem Kantenfilter von 400 nm bei einer Wellenlänge von 457 nm gemessen.

**Tabelle III: Waschergebnisse mit den erfindungsgemäßen Polyestern im Vergleich zu Soil Release Polyestern des Standes der Technik in dem Waschpulver IEC-A Standardwaschmittel von WfK, Dirty Motor Oil (DMO) Test an dem Testgewebe WFK 30A PES bei 40°C Waschtemperatur**

| IEC-A Standardwaschmittel von WfK ohne Zusatz | | Remission ( % ) |
|---|---|---|
| | | 23,3 |
| + 1 % Soil Release Polymer: | | |
| | WeylClean^{®} PSA 1 | 29,7 |
| | Erfindungsgemäßer Polyester, Beispiel 1 | 42,3 |
| | Erfindungsgemäßer Polyester, Beispiel 7 | 41,9 |
| | Erfindungsgemäßer Polyester, Beispiel 22 | 41,9 |
| | Polyester, Beispiel V-3^{*)} | 28,8 |
| | Polyester, Beispiel V-4^{*)} | 29,2 |

| | | |
|---|---|---|
| ^{*)} Polyester war in Flüssigwaschmittel-Formulierungen instabil und neigte zu Ausfällungen | | |

**Tabelle IV: Waschbedingungen**

| Waschmaschine: | Linitest, 3x vorausgerüstet |
|---|---|
| Wasserhärte: | 15° dH |
| Ca : Mg | 3 : 2 |
| Läppchen WFK 30A PES, 25 µl Motorenaltöl pro Läppchen | 4 |
| Waschtemperatur: | 40° C |
| Waschzeit: | 30 Min. |
| Waschmittelkonzentration: | 5,0 g/L |

## Patentansprüche

1. Polyester enthaltend, bezogen auf alle Struktureinheiten und Endgruppen im Molekül,
4 bis 30 Gew.-% an Struktureinheiten der Formel (I) oder der Formel (II) oder der Formeln (I) und (II),
0,25 bis 10 Gew.-% an Struktureinheiten der Formel (III) oder der Formel (IV) oder der Formeln (III) und (IV), und
0 bis 5 Gew.-% an Struktureinheiten der Formel (V)
-CO-R'-CO-O-C₂H₄-O- (I),
-CO-R¹-CO-O-(C₃H₆-O)- (II),
-CO-R²-CO-O-C₂H₄-O- (III),
-CO-R²-CO-O-(C₃H₆-O)- (IV),
-CO-R³-CO-O-R⁴-O- (V),
50 bis 95 Gew.-% an nichtionischen Endgruppen der Formel (VI), und
0 bis 5 Gew.-% an nichtionischen Endgruppen der Formel (VII), und
-CO-(O-C₂H₄-)ₙ-OR⁵ (VI), -CO-OR⁶ (VII),
worin
R¹ ein zweiwertiger aromatischer Kohlenwasserstoffrest ohne Sulfogruppen oder ohne Salzen von Sulfogruppen ist,
R² ein zweiwertiger mit mindestens einer Sulfogruppe oder mit dem Salz einer Sulfogruppe substituierter aromatischer Kohlenwasserstoffrest ist,
R³ ein Alkylen-, Cycloalkylen- oder Arylenrest ist,
R⁴ ein Alkylen- oder Cycloalkylenrest ist, mit der Maßgabe, dass die Stuktureinheit der Formel (V) sich von den Stuktureinheiten der Formeln (I), (II), (III) und (IV) unterscheidet,
R⁵ C₁-C₆-Alkyl, Cycloalkyl, Aryl oder Aralkyl ist,
R⁶ ein einwertiger organischer Rest ist, und
n eine Zahl zwischen 30 und 500 bedeutet.

2. Polyester nach Anspruch 1, **dadurch gekennzeichnet, dass** R¹ ein Phenylen- oder Naphthylenrest ist, vorzugsweise ein 1,3- oder 1,4-Phenylenrest und insbesondere ein 1,4-Phenylenrest.

3. Polyester nach mindestens einem der Ansprüche 1 bis 2, **dadurch gekennzeichnet, dass** R² ein mit ein oder zwei Sulfogruppen oder deren Salzen substituierter Phenylen- oder Naphthylenrest ist, insbesondere ein mit einer Sulfogruppe oder dem Salz einer Sulfogruppe in 5-Position substituierter 1,3-Phenylenrest.

4. Polyester nach mindestens einem der Ansprüche 1 bis 3, **dadurch gekennzeichnet, dass** diese neben den Endgruppen nur Struktureinheiten der Formeln (II) und (IV) enthalten.

5. Polyester nach mindestens einem der Ansprüche 1 bis 3, **dadurch gekennzeichnet, dass** diese neben den Endgruppen nur Struktureinheiten der Formeln (I), (II), (III) und (IV) enthalten.

6. Polyester nach mindestens einem der Ansprüche 1 bis 5, **dadurch gekennzeichnet, dass** diese nur Endgruppen der Formel (VI) enthalten.

7. Polyester nach mindestens einem der Ansprüche 1 bis 6, **dadurch gekennzeichnet, dass** n eine Zahl zwischen 45 und 230, vorzugsweise zwischen 55 und 140 bedeutet.

8. Polyester nach mindestens einem der Ansprüche 1 bis 7, **dadurch gekennzeichnet, dass** R⁵ C₁-C₆-Alkyl ist, insbesondere Methyl oder Ethyl.

9. Polyester nach mindestens einem der Ansprüche 1 bis 8, **dadurch gekennzeichnet, dass** diese einen Schmelzbereich aufweisen, der bei mindestens 45°C beginnt, insbesondere einen Schmelzbereich von 53°C bis 70 °C.

10. Polyester nach mindestens einem der Ansprüche 1 bis 9, **dadurch gekennzeichnet, dass** diese nur Endgruppen der Formel (VI) enthalten und neben den Endgruppen nur Struktureinheiten der Formeln (I), (II), (III) und (IV) enthalten.

11. Polyester nach mindestens einem der Ansprüche 1 bis 9, **dadurch gekennzeichnet, dass** die Polyester nur Struktureinheiten der Formeln (la) und (Va) und nur Endgruppen der Formel (VI) aufweisen, wobei der Anteil der Struktureinheiten der Formel (la) 4 bis 30 Gew. % beträgt und der Anteil der Struktureinheiten der Formel (Va) 0,25 bis 10 Gew. % und der Anteil der Endgruppen 50 bis 95 Gew.-% beträgt, bezogen auf alle Struktureinheiten und Endgruppen,
oder dass die Polyester nur Struktureinheiten der Formeln (Ib) und (Vb) und nur Endgruppen der Formel (VI) aufweisen, wobei der Anteil der Struktureinheiten der Formel (Ib) 4 bis 30 Gew. % beträgt und der Anteil der Struktureinheiten der Formel (Vb) 0,25 bis 10 Gew. % und der Anteil der Endgruppen 50 bis 95 Gew.-% beträgt, bezogen auf alle Struktureinheiten und Endgruppen,
oder dass die Polyester nur Struktureinheiten der Formeln (la), (Ib), (Va) und (Vb) und nur Endgruppen der Formel (VI) aufweisen, wobei der Anteil der Struktureinheiten der Formeln (la) und (Ib) zusammengenommen 4 bis 30 Gew. % beträgt und der Anteil der Struktureinheiten der Formeln (Va) und (Vb) zusammengenommen 0,25 bis 10 Gew. % und der Anteil der Endgruppen 50 bis 95 Gew.-% beträgt, bezogen auf alle Struktureinheiten und Endgruppen, wobei die Endgruppen der Formel (VI) über eine Esterbindung mit Carboxylresten des Polyesters kovalent verbunden sind 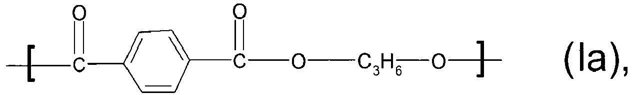 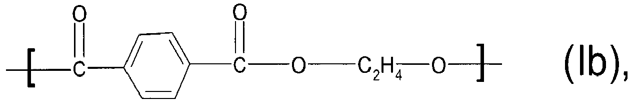 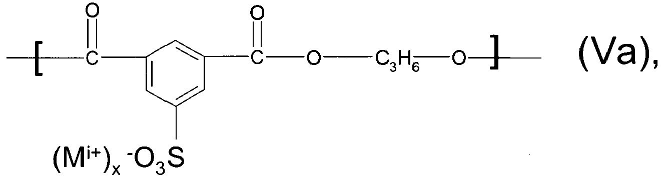 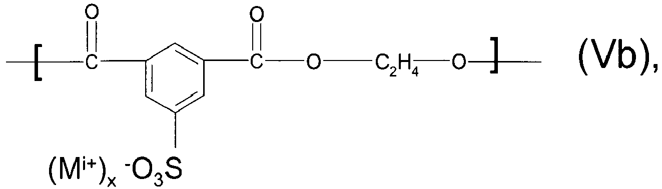
-CO-(O-C₂H₄)ₙ-OR⁵ (VI),
worin R⁵ und n die in Anspruch 1 definierten Bedeutungen besitzen,
M Wasserstoff oder ein ein- oder zweiwertiges Kation bedeutet,
i 1 oder 2 ist,
x 0,5 oder 1 bedeutet und das Produkt i · x = 1 ist.

12. Wasch- oder Reinigungsmittel enthaltend mindestens einen Polyester nach einem der Ansprüche 1 bis 11.

13. Wasch- oder Reinigungsmittel nach Anspruch 12, **dadurch gekennzeichnet dass** dieses ein Flüssigwaschmittel ist, das vorzugsweise 10 bis 40 Gew. %, bezogen auf die Gesamtmenge des Flüssigwaschmittels, an anionischem Tensid oder an Gemischen von anionischen Tensiden enthält.

14. Wasch- oder Reinigungsmittel nach Anspruch 12, **dadurch gekennzeichnet dass** dieses ein Waschmittel ist, das in Pulverform oder in Form einer Tablette vorliegt.

15. Verwendung der Polyester nach mindestens einem der Ansprüche 1 bis 11 als Schmutzablösepolymere oder als Vergrauungsinhibitoren in Wasch- und Reinigungsmitteln, Textilpflegemitteln und Mitteln zur Ausrüstung von Textilien.
